(19) Europäisches Patentamt / European Patent Office / Office européen des brevets

(11) **EP 4 538 746 A1**

(12) **EUROPEAN PATENT APPLICATION**

(43) Date of publication:
**16.04.2025  Bulletin 2025/16**

(21) Application number: **23383046.2**

(22) Date of filing: **11.10.2023**

(51) International Patent Classification (IPC):
**G01S 19/14** $^{(2010.01)}$         **G01S 19/46** $^{(2010.01)}$

(52) Cooperative Patent Classification (CPC):
**G01S 19/14; G01S 19/46;** G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Fundació Privada I2CAT, Internet i Innovació Digital a Catalunya**
**08034 Barcelona (ES)**
• **Institució Catalana de Recerca i Estudis Avançats**
**(ICREA)**
**08010 Barcelona (ES)**

(72) Inventors:
• **COSTA PÉREZ, Xavier**
**08330 Premià de Mar (ES)**
• **CAMPOLO, Federico**
**08906 L'Hospitalet de Llobregat (ES)**
• **BLAGA, Andra**
**08025 Barcelona (ES)**

(74) Representative: **Torner, Juncosa I Associats, SL**
**C / Pau Claris, 108, 1r 1a**
**08009 Barcelona (ES)**

(54) **A COMPUTER IMPLEMENTED METHOD, A SYSTEM AND COMPUTER PROGRAM FOR ESTIMATING A TARGET'S POSITION**

(57)    A method, system and computer program for estimating a target's position are provided. The method comprises: receiving information relevant for the positioning of a set of nodes providing coverage to a coverage area of a target, the set of nodes comprising first-type nodes and second-type nodes; receiving radio cellular network measurements from the first-type nodes; receiving GNSS satellite measurements from the second-type nodes; assembling the received radio cellular network measurements into a matrix of distance measurements; removing outliers included in the radio cellular network measurements; combining the radio cellular network measurements and the GNSS satellite measurements into a single vector; executing a weighting approach comprising applying weights to the first-type nodes and to the second-type nodes, collecting all the applied weights, and multiplying the collected weights by the single vector, providing a new vector of weighted measurements; and determining a position of the target based on the new vector of weighted measurements using a multilateration approach.

**Fig. 1**

**EP 4 538 746 A1**

## Description

### TECHNICAL FIELD

The present invention relates to a method, system and computer programs for estimating a target's position such as a vehicle or a user computing device.

### BACKGROUND OF THE INVENTION

Nowadays in-vehicle navigation systems still largely rely on the Global Navigation Satellite System (GNSS). GNSS applies the principle of multilateration where, exploiting the ranging information coming from different satellites, the user can estimate its own position. However, due to propagation effects such as multipath and shadowing, GNSS systems alone are limited to meet advanced SAE driving automation levels.

To solve this problem the largely available cellular network can be used. Since their inception, cellular standards have been designed and used for positioning applications with cell-level accuracy (e.g. emergency calls), thus limiting their applicability in accuracy critical operations. However, with the advent of 5G New Radio (NR) this trend is set to change. In fact, thanks to its larger bandwidth and higher working frequency, 5G-NR sets the bar higher in terms of the accuracy achievable with a cellular-based positioning system. In particular, it can leverage on higher temporal resolutions and arrays of antennas for precisely estimating the Time of Flight (ToF) and Angle of Arrival (AoA) of a signal. Within this context and considering that nowadays the devices are increasingly connected to mobile networks by default to enable advanced services, cellular-based localization can be considered to improve GNSS localization.

In the literature different solutions have been investigated to improve the performance of GNSS systems. In particular, state-of-the-art positioning solutions rely on different approaches for compensating the performance degradation of GNSS in specific scenarios; these combine the measurements collected by GNSS with 4G-LTE, inertial sensors or other types of sensors.

The potential of LTE in providing a localization solution, either alone or in conjunction with the GNSS system is evaluated in [1-5]. In particular, these solutions consider different techniques such as TDOA and RTT and in the specific case of fusion with GNSS, they investigate the use of Kalman Filter and other filtering approaches. As in present invention case, all proposals provide the ranging estimation through the analysis of a transmitted and received reference signal. However, in contrast with this related work, the present invention considers 5GNR in place of LTE. Being the latest available mobile air interface, 5G-NR benefits from larger bandwidths, thus higher temporal accuracy which allows us to lower the positioning error as compared to the state of the art.

The fusion of GNSS with additional information coming from Inertial Sensors (INS), Inertial Measurement Units (IMU) and 3D digital maps for compensating the performance degradation of GNSS (especially within Urban Canyons), is investigated in [6-11]. The present invention significantly differs from these approaches since it does not rely on internal vehicle sensor information or complex maps which might not be available or be expensive. However, such systems might complement the present invention if available to further improve the positioning error.

A computer vision-based localization system exploiting single or stereo camera systems, together with inertial sensors and capable to achieve lane-level accuracy of vehicle localization in urban scenarios is proposed in [12-14]. While this is an interesting approach in terms of accuracy, it faces challenges in difficult atmospheric conditions or at night, making it unreliable as stand-alone for assisted/automated driving requirements. However, the present invention is complementary to such systems and could work together if available, with the additional advantage of being more robust in poor lighting and/or atmospheric conditions.

Finally, the use of RADAR and LIDAR sensors for vehicle localization within the autonomous driving applications scope is investigated by the authors in [15-18]. While these system return strong performance and robustness to different environmental conditions, they rely on very expensive equipment. Moreover, these sensor are not always readily available in vehicles, thus reducing its applicability to a limited set of compatible cars. Present invention, instead, relies on on-board equipment expected to be deployed in all cars in the future (particularly, GNSS and 5G systems), and potentially retrofittable, making it available to the assisted/automated driving mass market at large-scale.

GNSS POSITIONING

GNSS is a collective term for those systems providing a user equipment (UE) with a positioning solution from signals transmitted by orbiting satellites. Various such systems guarantee global coverage, chief among them the NAVSTAR Global Positioning System (GPS). A GNSS features a constellation of satellites, of which a subset J is visible from the UE. Each satellite broadcasts a signal containing a ranging code and a data message; the ranging code indicates the transmission time of the signal, while the data message includes timing parameters and information about the satellite's orbit. From the observation of these signals, the UE computes a position, velocity, and time solution at a rate

$f_{GNSS}$ which can be up to 10 Hz. Positioning is performed through multilateration, based on the distance from the UE to each visible satellite, estimated from the ToF of the J received signals.

*A. Pseudorange Estimation*

If the UE and satellites clock are synchronized, the measured distance ρ from the *j*th satellite to the UE coincides with the true distance and is calculated as [19]

$$\rho_j = \delta t_j^{\text{ToF}} c \qquad j = 1, \ldots, J \qquad (1)$$

with *c* the speed of light and $\delta t_j^{ToF} = t_{sa_j} - t_{st_j}$, given $t_{sa_j}$ and $t_{st_j}$ as the arrival time at the receiver and the transmission time at the satellite, respectively.

However, receiver and satellites clocks are usually not synchronized, and the atmosphere slightly perturbs the speed and direction of the propagation. The measured distance is hence afflicted by an error, and indeed the ranging estimate $\widehat{\rho}_j$ is aptly termed *pseudorange*. In particular, if receiver clock is ahead of system time, $\widehat{t_{sa_1}} > t_{sa_1}$ with $\hat{t}$ the measured time, the distance is overestimated. If, instead, satellite clock is ahead of system time, $t_{st_1} > \widehat{t_{st_1}}$, the distance is underestimated. In general, the error introduced by the lack of synchronization is $\delta_{\rho j} = \delta t_{rc} - \delta t_{s_1}) c$, with $\delta t_{rc}$ and $\delta t_{s_1}$ the clock error with respect to system time of the receiver and *j*th satellite, respectively [19].

Satellites clock errors are measured and transmitted in the data message, allowing the UE to correct them. Conversely, $\delta t_{rc}$ is unknown and therefore treated as additional parameter to be determined, whereby ranging from at least four different satellites is required for positioning in 3D. The pseudorange measured at the UE after correcting the satellite clock errors equals [19]

$$\tilde{\rho}_j = \left(\delta t_j^{\text{ToF}} + \delta t_{\text{rc}}\right) c \qquad (2)$$

Subsequently, the UE velocity can be obtained from the rate of change of the pseudorange.

In addition to lack of synchronization, signal blockage represents another source of error for GNSS. It affects mainly low-elevation satellites, with the elevation defined as the angle between the tangent to the earth's curvature and the line-of-sight (LOS) to the satellite. This phenomenon occurs especially in dense urban areas where the elevation mask above which the satellites are visible is determined by the ratio between the buildings' height and the street width.

*B. Positioning*

Within present invention reference to positioning is made in the 2D space rather than in 3D. Therefore, a 2D map is introduced where $p_j = (x_j, y_j)$ is the position of the *j*th satellite, $p = (x,y)$ that of the UE and

$$\rho_j = \|p_j - p\| = \sqrt{(x - x_j)^2 + (y - y_j)^2} \qquad (3)$$

the distance between the two.

Once pseudoranges from at least three satellites are collected, the UE finds a location estimation through multilateration [19]. The position is to be estimated on a 2D map, hence the process is introduced for (x, y) coordinates. Multilateration finds the coordinates that solve the least-squares problem

$$\hat{p} = (\hat{x}, \hat{y}) = \arg\min_p \sum_{j=1}^{J} (\rho_j - \tilde{\rho}_j)^2. \qquad (4)$$

Each of the J pseudoranges, centered at the corresponding satellite, defines a circle of radius $\widetilde{\rho}_J$. Because of the discussed errors, these circles do not intersect at a point, but rather define an area. To solve (4), GNSS rely on the nonlinear least-squares (NLLS) approach, which linearizes the quadratic form. This is carried out through a Taylor expansion, thus rearranging the gradient equations of the problem into a set of linear equations. To solve these equations, an iterative procedures such as the Gauss-Newton algorithm is employed.

## 5G-NR POSITIONING

LTE relies heavily on always-on cell-specific downlink reference signals for coherent demodulation, channel quality estimation, and other purposes [20]. This always-on characteristic reduces the applicability for localization purposes. In contrast, 5G-NR abides by the principle of ultra-lean transmission: reference signals can be transmitted only when needed. The standard features demodulation reference signal (DMRS), phase-tracking reference signal (PT-RS), channel state information reference signal (CSI-RS), tracking reference signal (TRS), and sounding reference signal (SRS) [21]. Reference signals can be dynamically allocated within each slot of a 5G-NR subframe, thus adapting their sample rate $f_{5G-NR}$, and any of them is suitable for localization purposes.

### A. Distance Estimation

The ToF can be inferred from the peak of the circular cross correlation between the transmitted and received reference signals [1], [22]. Generally constructed from a sequence of the constant amplitude zero autocorrelation (CAZAC) family, reference signals exhibit the zero autocorrelation property

$$R_{\xi\xi}(q) = \sum_{n=0}^{N-1} \xi(n)\bar{\xi}(n+q) = \delta(q) \qquad (5)$$

with $\xi$ being the considered sequence, $\bar{\xi}$ its complex conjugate, N the length of the sequence, and $q$ the delay. Letting $u$ and $v$ be the transmit and received reference signals, with $U$ and $V$ their frequency-domain counterparts, the circular correlation satisfies

$$\text{Corr}(u, v) \Longleftrightarrow U\bar{V}. \qquad (6)$$

As a result, the estimated ToF is found by looking for the largest peak of the circular cross-correlation

$$\hat{\tau} = \max\big(\text{IDFT}\{U\bar{V}\}\big). \qquad (7)$$

Considering one UE and a set of $L$ gNBs in range, the distance between the $\ell$th gNB and the UE follows as

$$\hat{d}_\ell = \hat{\tau}_\ell c \qquad (8)$$

### A. Multilateration

As in the GNSS case, the UE position is estimated through multilateration, based on $L \geq 3$ distance measurements. Letting $p_l = (x_l, y_l)$ be the position of the $\ell$th gNB, the distance between UE and gNB is

$$d_\ell = \|\boldsymbol{p}_\ell - \boldsymbol{p}\| = \sqrt{(x - x_\ell)^2 + (y - y_\ell)^2} \qquad (9)$$

and the least-squares problem in (4) morphs into

$$\hat{\boldsymbol{p}} = (\hat{x}, \hat{y}) = \arg\min_{\boldsymbol{p}} \sum_{\ell=1}^{L} \big(d_\ell - \hat{d}_\ell\big)^2. \qquad (10)$$

In this case, the NLLS solution is found via the Gauss-Newton method with line-search for the step size. The Gauss-Newton algorithm is initialized with the linear least-squares solution.

## DESCRIPTION OF THE INVENTION

Present invention proposes, according to one aspect, a computer implemented method for estimating a target's position. The method comprises performing the following steps by one or more processors: receiving or collecting information relevant for the positioning of each one of a set of nodes providing coverage to a coverage area of a target, the set of nodes comprising a plurality of first-type nodes and a plurality of second-type nodes; receiving or collecting radio cellular network measurements from the plurality of first-type nodes; receiving or collecting GNSS satellite measurements from the plurality of second-type nodes; assembling the received or collected radio cellular network measurements into a matrix of distance measurements for a GNSS interval with a frequency rate $f_{GNSS}$; removing outliers included in the radio cellular network measurements by preprocessing the received or collected radio cellular network measurements; combining the radio cellular network measurements and the GNSS satellite measurements into a single vector of measurements; executing a weighting approach comprising applying one or more weights to the plurality of first-type nodes and to the plurality of second-type nodes, collecting all the applied weights, and multiplying the collected weights by the single vector of measurements, providing a new vector of weighted measurements as a result; and determining a position of the target based on the new vector of weighted measurements using a multilateration approach.

In some embodiments, the preprocessing of the received or collected radio cellular measurements comprises analyzing a variance of the radio cellular network measurements and considering a signal-to-noise ratio of the radio cellular network measurements as parameters to evaluate the value of the first-type nodes information.

In some embodiments, the preprocessing of the received or collected radio cellular measurements comprises removing the radio cellular network measurements with a signal-to-noise ratio lower than a given threshold; removing said outliers, the latter including multipath propagation and/or noise; and calculating a geometrical distortion of the radio cellular network measurements by applying a linear model on the matrix of radio cellular network distance measurements.

In some embodiments, before the combining step, the method comprises oversampling and filtering the preprocessed radio cellular network measurements. Particularly, the filtering comprises applying an Exponentially-Weighted Moving Average (EWNA) filter.

In some embodiments, the weights applied to the plurality of first-type nodes are different to the weights applied to the plurality of second-type nodes.

In some embodiments, the weights applied to the plurality of first-type and to the plurality of second-type nodes are determined through a machine learning approach.

In some embodiments, the weighting approach comprises assigning different values to the one or more weights based on different parameters including a power received at the target, an estimated distance at the target, a signal-to-noise ratio at the target, a Line of Sight (LoS) and a Non-LoS (NLoS) probability of the plurality of first-type nodes, an Horizontal Dilution of Precision (HDOP), an angle of arrival (AoA) of the plurality of first-type nodes or of the plurality of second-type nodes, or combinations thereof.

According to the invention, the lateralization approach can comprise the application/execution of a Non-Linear Least Squares (NLLS) algorithm or a Weighted-Non-Linear Least Squares (WNLLS) algorithm, among others.

In some embodiments, the lateralization approach can further comprise the use of a Gauss-Newton algorithm.

According to the invention, the radio cellular network measurements at least comprise 5G New Radio (5G-NR) measurements. Moreover, the target can comprise a vehicle, a user equipment or any other type of connected device.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, present invention explores the potential of 5G-NR to improve the performances of current satellite only vehicular positioning. In particular, the present invention designs a fusion localization solution that considers the ranging measurements from both 5G-NR and GNSS systems and outperforms them in terms of accuracy and reliability. The main idea behind the present invention is to maximize the strengths and minimize the weaknesses of both systems, resulting in an overall more accurate and reliable positioning system that provides coverage in the most remote areas, dense cities and even underground.

## BRIEF DESCRIPTION OF THE DRAWINGS

The previous and other advantages and features will be more fully understood from the following detailed description of embodiments, with reference to the attached figures, which must be considered in an illustrative and non-limiting manner, in which:

Fig. 1: Proposed framework for the fusion of GNSS and 5G-NR localization systems, according to an embodiment.

Fig. 2: Detail on the proposed fusion of 5G-NR and GNSS samples, according to an embodiment.

**DETAILED DESCRIPTION OF THE INVENTION AND OF PREFERRED EMBODIMENTS**

Present invention provides a method, and a corresponding system, to calculate the position of target 1, for instance, a vehicle, a user equipment, or any other type of connected device, by considering the ranging measurements from both radio cellular network measurements and GNSS satellite measurements and by solving the multilateration problem.

Please note that while in the following the radio cellular network measurements specifically refer to 5G-NR, it's important to emphasize that the present invention may be equally applicable to other similar radio technologies.

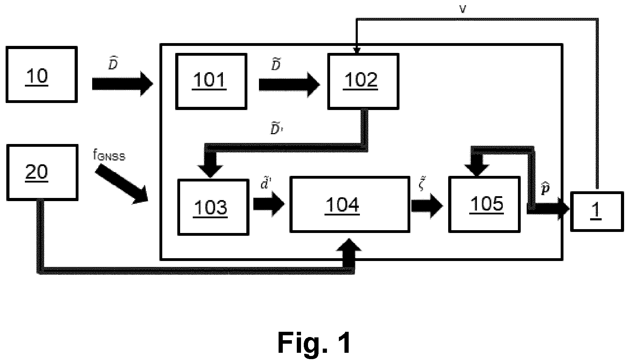

Fig. 1 illustrates an embodiment of the building blocks of the proposed architecture for estimating the target's position.

Given a set of N nodes 10, 20, particularly gNBs 10 such as 5G nodes, and satellites 20, the method considers the 2D positions $(x_i, y_i)$, $i = 1, \ldots, N$, and corresponding distance measurements $\widehat{d_i}$ between the nodes 10, 20 and the target 1, which describe circles of radius $\widehat{d_i}$ centered in the corresponding position of the nodes 10, 20. The objective of multilateration is finding the point in which all circles cross, which corresponds to the estimated position of the target 1.

In case of ideal conditions, where no noise nor bias are present in the measurements, the described circles of radius $\widehat{d_i}$ cross only in one point which is the position of the target 1. However, in a real scenario the presence of noise and biases in the measurements make the circles define an area in which they cross each other, rather than a single point. This area contains the actual position of the target 1. Therefore, to solve the multilateration problem and find the position of the target, present invention can apply the Non-Linear Least Squares (NLLS) approach, for which

$$\hat{p} = (\hat{x}, \hat{y}) = arg\,min_p \sum_{i=1}^{N} \left(d_i - \widehat{d_i}\right)^2,$$

with $d_i = \|p_i - p\|^2$ being the real distance between the target position $p$ and the position of the $i$-th node $p_i$. However, this equation in general has no close solution, which therefore needs to be found iteratively. To do that, the Gauss-Newton approach is used, where the estimated position is found as

$$\hat{p}^{(k)} = \hat{p}^{(k-1)} + \mu^{(k)} \left(H^T\left(\hat{p}^{(k-1)}\right)H\left(\hat{p}^{(k-1)}\right)\right)^{-1} H^T\left(\hat{p}^{(k-1)}\right)\left(d - \hat{d}\right),$$

with $H(\hat{p})$ being the matrix of directional derivatives $\left(\frac{\hat{x}-x_i}{d_i}, \frac{\hat{y}-y_i}{d_i}\right)$, $k$ the iteration number and $\mu_k$ the step size.

Moreover, since the contributions $\hat{d}$ from the set of $N$ nodes 10, 20 can have different levels of accuracy due to the noise and bias affecting them, present invention implements a weighting approach. This approach allows taking advantage of all measurements, while at the same time considering the reliability of each estimation, thus avoiding throwing away information based on a-priori hypotheses. As a result, with the introduction of the weighting matrix $W$, the NLLS based on the Gauss-Newton iterative approach becomes

$$\hat{p}^{(k)} = \hat{p}^{(k-1)} + \mu^{(k)} \left(H^T\left(\hat{p}^{(k-1)}\right)WH\left(\hat{p}^{(k-1)}\right)\right)^{-1} H^T\left(\hat{p}^{(k-1)}\right)W\left(d - \hat{d}\right).$$

Continuing with the explanation of Fig. 1, as explained in the previous sections, GNSS and 5G-NR produce distance estimations at rates $f_{GNSS}$ and $f_{5G-NR}$, i.e., with intervals $T_{GNSS} = 1/f_{GNSS}$ and $T_{5G-NR} = 1/f_{5G-NR}$. In general, $T_{GNSS} > T_{5G-NR}$ hence 5G-NR produces $F = [T_{GNSS}/T_{5G-NR}]$ as many samples within a GNSS interval. Thus, over one GNSS interval, the radio cellular network measurements (i.e. the 5G-NR measurements) collected from the L gNBs can be assembled into a matrix of distance measurements, as follows:

$$\hat{D} = \begin{bmatrix} \hat{d}_1^{(1)} & \hat{d}_1^{(1)} & \dots & \hat{d}_1^{(F)} \\ \hat{d}_2^{(1)} & \hat{d}_2^{(2)} & \dots & \hat{d}_2^{(F)} \\ \vdots & \vdots & \vdots & \vdots \\ \hat{d}_L^{(1)} & \hat{d}_L^{(2)} & \dots & \hat{d}_L^{(F)} \end{bmatrix}. \qquad (11)$$

Measurement Preprocessing 101:

5G-NR samples are affected by multipath propagation and noise. By analyzing the variance of the measurements, and by taking into consideration parameters such as the signal to noise ratio (SNR), the measurement preprocessing block 101 can filter and correct these estimations.

In an embodiment, as a first step, the measurement preprocessing block 101 removes measurements from gNBs 10 with SNR < SNRmin. This yields a new set of $L'$ gNB measurements that excludes low-SNR values. Then, outliers are removed. In some embodiments, present invention considers as outliers the distance estimates that are more than three scaled median absolute deviations (MAD) from the median for each gNB 10.

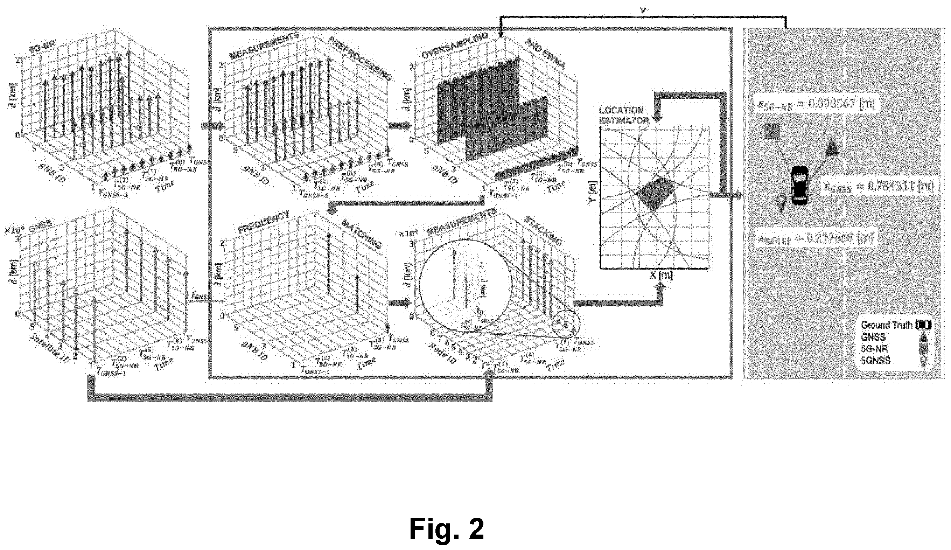

Another source of error is the application of 3D distance estimates, obtained from ToF measurements, to 2D space. As the height of the gNBs 10 is unknown, it is not possible to project the 3D estimates and a geometric distortion arises. Provided the good correlation between the entire set of estimated distances $\hat{D}$ and the corresponding errors $\varepsilon_{5G\text{-}NR}$, a linear model to estimate the geometrical distortion from the ToF measurements can be designed. The model can be obtained by performing a linear regression on the data set of distance measurements. For instance, applying classical linear regression theory, the geometrical distortion of the measurements is calculated, which is then subtracted from $\hat{D}$ at each GNSS interval to correct the distortion. As a result, the measurement preprocessing block 101 returns a matrix $\tilde{D}$ of corrected measurements, as depicted in Fig. 2.

Oversampling and Filtering (102):

Since not all gNBs 10 produce exactly $F$ measurements within the GNSS interval, an Oversampling and Filtering block 102, which is optional, expands the number of available samples through oversampling. Subsequently it applies a filter, such as the Exponentially-Weighted Moving Average (EWNA) filter, for smoothing. Indicating with a the oversampling factor, the Oversampling and Filtering block 102 interpolates the distance estimates of each $\ell$th gNB within the GNSS interval. As a result, each gNB 10 that has at least two samples will now have a new set of a · F distance measurements.

The method then applies the filter to smooth the window of measurements, which helps increasing the overall accuracy. In particular,

$$\tilde{d}_\ell^{'(n)} = (1 - \beta(\nu))\tilde{d}_\ell^{'(n-1)} + \beta(\nu)\tilde{d}_\ell^{'(n)} \qquad (12)$$

with n = 1, . . . , a · F and $\tilde{d}_l^{'(n)}$ the $n$th interpolated distance estimate from the $\ell$th gNB. For the filter, β is set according to the velocity v of the target 1, following a model which is determined a priori through a velocity analysis. For instance, for the specific case of the target 1 being a vehicle, the β minimizing the RMSE of 5G-NR distance measurements is found varying v from 10 to 300 km/h. As depicted in Fig. 2, the block then returns an L' × (a · F) matrix $\tilde{D}'$ containing the over sampled and smoothed set of 5G-NR samples.

Frequency Matching (103):

GNSS and 5G-NR provide samples at different sampling rates $f_{5G\text{-}NR}$ and $f_{GNSS}$; however, to enable the fusion leading to a single position solution at frequency $f_{GNSS}$, the two systems need to be working at the same sample rate. Based on the IEEE 1588 standard, for which 5G RAN can use GNSS clock as reference to maintain their transmissions synchronized, present invention makes the assumption that GNSS and 5G-NR systems are synchronized between each other. Therefore, the role of the Frequency Matching block 103 is to equalize the sample rates of 5G-NR and GNSS. To do so, it takes as input the matrix of cleaned and corrected measurements $\tilde{D}'$ and the sample rate of GNSS, $f_{GNSS}$. Then, for each available gNB 10 it selects only the last sample within the a · F window. As depicted in Fig.2, the the Frequency Matching block 103 finally returns a vector $\tilde{d}'$ of 5GNR measurements at frequency $f_{GNSS}$.

Measurements Stacking (104):

Now that both systems provide samples at frequency $f_{GNSS}$, the Stacking block 104 fuses them in order to generate a single position estimation. To do so, it applies a weighting approach based on one or more predefined parameters. These parameters, particularly define a set of L' weights $\omega_l^{gNB}$ for the gNBs 10 and another set of J weights $\omega_j^{Sat}$ for GNSS 20.

In an embodiment, all weights are collected in a diagonal matrix W of dimensions (L' + J) $\times$ (L' + J), which is multiplied by the vector of stacked 5G-NR and GNSS samples. As a result a new vector $\tilde{\zeta}$ of weighted measurements is obtained, with dimensions (L' + J) $\times$ 1:

$$\tilde{\zeta} = \begin{bmatrix} \tilde{d}'_1 \cdot w_1^{gNB} \\ \tilde{d}'_2 \cdot w_2^{gNB} \\ \vdots \\ \tilde{d}'_{L'} \cdot w_{L'}^{gNB} \\ \tilde{\rho}_1 \cdot w_1^{Sat} \\ \tilde{\rho}_2 \cdot w_2^{Sat} \\ \vdots \\ \tilde{\rho}_J \cdot w_J^{Sat} \end{bmatrix}$$

Location Estimator (105):

Finally, the method estimates the position of the target 1 based on the set of measurements $\tilde{\zeta}$. To do so, it uses the multilateration approach where Z = 1, ... , L' +J is defined as the number of nodes 10, 20 and

$$\zeta = \begin{bmatrix} d' \\ \rho \end{bmatrix} \qquad (13)$$

is the vector of true distances between the target 1 and the Znodes. When a previous position estimate is not available, the Location Estimator block 105 can solve the least squares problem as in [4] through LLS, using only the 5G-NR measurements within $\tilde{\zeta}$. Instead, when at least one estimated position is available, the block 105 solves the least squares problem formulate as

$$\hat{p} = (\hat{x}, \hat{y}) = \arg\min_{p} \sum_{z=1}^{Z} \left( \zeta_z - \tilde{\zeta}_z \right)^2 \qquad (14)$$

applying an NLLS algorithm. As a result, the block returns an estimated position $\hat{p}$ as a vector of 2D coordinates in the chosen reference system (e.g. X-Y or Latitude-Longitude coordinates).

In other embodiments, the weighting approach, which as said before defines a matrix W of dimensions $N \times N$ whose only non-zero values are on the diagonal, being these non-zero values the weights, initialized to 1, different values can be assigned to the weights based on different parameters, available at the time of the estimation. In particular, the present invention can consider:

- Power received at the target 1: the subset of weights for the gNBs 10, $N_{gNBs} \in N$, is defined as the normalized power received at the target 1

$$w_{P_{rx}} = \frac{(P_{rx} - min(P_{rx}) + 1)}{max(P_{rx} - min(P_{rx}) + 1)}$$

for which $0 < w_{P_{rx}} \leq 1$.

- Estimated distance at the target 1: the subset of weights for the gNBs 10, $N_{gNBs} \in N$, is defined as the normalized distance estimate between the target 1 and the nodes 10, as

$$w_{\hat{d}} = \frac{(\hat{d} - min(\hat{d}) + 1)}{max(\hat{d} - min(\hat{d}) + 1)}$$

for which $0 < w_{\hat{d}} \leq 1$.

- Signal-to-Noise Ratio (SNR) at the target 1: the SNR is calculated as the ratio between the power of the received signal at the target 1 $P_{rx}$ and the power of the noise at the receiver $N$. Based on this parameter, the subset of weights for the gNBs 10, $N_{gNBs} \in N$, is calculated as

$$w_{SNR} = \frac{(SNR - min(SNR) + 1)}{max(SNR - min(SNR) + 1)}$$

for which $0 < w_{SNR} \leq 1$.

- Line of Sight (LoS) and Non-LoS (NLoS) probability of the gNBs 10: the LoS-NLoS probability of each received gNB 10, $P_{LoS-NLoS}$, is determined at the target 1 from the Channel State Information (CSI) matrix. Based on this probability, the subset of weights for the gNBs 10, $N_{gNBs} \in N$, is calculated as

$$w_{LoS-NLoS} = \frac{1}{1 + P_{LoS-NLoS}}$$

for which $0 < w_{LoS-NLoS} \leq 1$.

- Horizontal Dilution of Precision (HDOP) of the gNBs 10: the HDOP is a parameter measuring the geometric quality of anchors dispositions when solving a multilateration approach. This is because in multilateration how the distribution of the anchors around the target affects the final accuracy of the estimation, with the ideal case being having the nodes all around the target 1. In general $0 < HDOP \leq 20$, with $HDOP < 1$ being the ideal case and $HDOP \sim 20$ the worst case. In the present invention this parameter is used to calculate the subset of weights for the gNBs 10, $N_{gNBs} \in N$, as

$$w_{HDOP,gNBs} = \frac{1}{1 + HDOP, gNBs}$$

  thus giving more or less relevance to the whole set of available gNBs 10 depending on the quality of their deployment around the target 1.
- HDOP of the satellites 20: as for the case of the gNBs 10, present invention can calculate the subset of weights for the satellites 20, $N_{sat} \in N$, based on their geometrical configuration around the target 1

$$w_{HDOP,sat} = \frac{1}{1 + HDOP, sat}$$

This set of weights for both gNBs 10 and satellites 20 can also be combined to define a new set of weights. This allows increasing the overall accuracy of the final position estimation. As an example, a combination of weights could be (but is not limited to):

- HDOP of gNBs times HDOP of satellites: the weighting matrix W will be composed by the first $N_{gNBs}$ diagonal entries being equal to $w_{HDOP,gNBs}$, while the remaining $N_{sat}$ entries will be equal to $w_{HDOP,sat}$.
- SNR at the target 1 times HDOP of satellites 20: in this case present invention filters the gNBs 10 by means of the SNR at the target 1 and the satellites 20 through the HDOP. Hence, the first $N_{gNBs}$ diagonal entries will be equal to $w_{SNR}$, while the remaining $N_{sat}$ entries will be equal to $w_{HDOP,sat}$.

- SNR at the target 1 times HDOP of gNBs times HDOP of satellites: finally, in this case present invention weights the contributions from the available gNBs 10 by means of both SNR at the target 1 and their HDOP. Satellites contributions instead are weighted by means of the HDOP. As a result, the first $N_{gNBs}$ diagonal entries will be equal to $w_{SNR} \times W_{HDOP, gNBs}$ while the last $N_{sat}$ entries will be equal to $w_{HDOP,sat}$.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

**References**

[1] A. Albanese, V. Sciancalepore, and X. Costa-P'erez, "Sardo: An automated search-and-rescue drone-based solution for victims localization," IEEE Transactions on Mobile Computing, vol. 21, no. 9, pp. 3312-3325, 2022.

[2] J. A. Del Peral-Rosado, R. E. I Castillo, J. Miguez-Sanchez, M. Navarro-Gallardo, J. A. Garcia-Molina, J. A. Lopez-Salcedo, G. Seco-Granados, F. Zanier, and M. Crisci, "Performance analysis of hybrid GNSS and LTE localization in urban scenarios," in 2016 8th ESA Workshop on Satellite Navigation Technologies and European Workshop on GNSS Signals and Signal Processing (NAVITEC), 2016, pp. 1-8.

[3] C. Mensing, S. Sand, and A. Dammann, "Hybrid data fusion and tracking for positioning with GNSS and 3GPP-LTE," International Journal of Navigation and Observation, vol. 2010, pp. 1-12, 2010.

[4] G. De Angelis, G. Baruffa, and S. Cacopardi, "GNSS/cellular hybrid positioning system for mobile users in urban scenarios," IEEE Transactions on Intelligent Transportation Systems, vol. 14, no. 1, pp. 313-321, 2012.

[5] J. A. del Peral-Rosado, J. A. Lopez-Salcedo, G. Seco-Granados, F. Zanier, and M. Crisci, "Preliminary analysis of the positioning capabilities of the positioning reference signal of 3GPP LTE," in Proceedings of European Workshop on GNSS signals and Signal Processing. Citeseer, 2011.

[6] X. Liu, T. Ballal, and T. Al-Naffouri, "GNSS-based localization for autonomous vehicles: Prospects and challenges," in Proceedings of the EUSIPCO 27th European Signal Processing Conference, A Coruna, Spain, 2019, pp. 2-6.

[7] Y. Gu, L.-T. Hsu, and S. Kamijo, "GNSS/onboard inertial sensor integration with the aid of 3-D building map for lane-level vehicle self-localization in urban canyon," IEEE Transactions on Vehicular Technology, vol. 65, no. 6, pp. 4274-4287, 2016.

[8] D. H. Won, E. Lee, M. Heo, S.-W. Lee, J. Lee, J. Kim, S. Sung, and Y. J. Lee, "Selective integration of GNSS, vision sensor, and INS using weighted DOP under GNSS-challenged environments," IEEE Transactions on Instrumentation and Measurement, vol. 63, no. 9, pp. 2288-2298, 2014.

[9] F. Zhang, H. Stahle, G. Chen, C. C. C. Simon, C. Buckl, and A. Knoll, "A sensor fusion approach for localization with cumulative error elimination," in 2012 IEEE International Conference on Multisensor Fusion and Integration for Intelligent Systems (MFI). IEEE, 2012, pp. 1-6.

[10] J. K. Suhr, J. Jang, D. Min, and H. G. Jung, "Sensor fusion-based low cost vehicle localization system for complex urban environments," IEEE Transactions on Intelligent Transportation Systems, vol. 18, no. 5, pp. 1078-1086, 2016.

[11] J. A. del Peral-Rosado, F. Gunnarsson, S. Dwivedi, S. M. Razavi, O. Renaudin, J. A. Lopez-Salcedo, and G. Seco-Granados, "Exploitation of 3d city maps for hybrid 5G RTT and GNSS positioning simulations," in ICASSP 2020 - 2020 IEEE International Conference on Acoustics, Speech and Signal Processing (ICASSP), 2020, pp. 9205-9209.

[12] N. Mattern and G. Wanielik, "Vehicle localization in urban environments using feature maps and aerial images," in 2011 14th International IEEE Conference on Intelligent Transportation Systems (ITSC). IEEE, 2011, pp. 1027-1032.

[13] I. Parra, M. A. Sotelo, D. F. Llorca, and M. Oca~na, "Robust visual odometry for vehicle localization in urban environments," Robotica, vol. 28, no. 3, pp. 441-452, 2010.

[14] C. Li, B. Dai, and T. Wu, "Vision-based precision vehicle localization in urban environments," in 2013 Chinese Automation Congress. IEEE, 2013, pp. 599-604.

[15] E. Ward and J. Folkesson, "Vehicle localization with low cost radar sensors," in 2016 IEEE Intelligent Vehicles Symposium (IV), 2016, pp.864-870.

[16] D. Vivet, F. G'erossier, P. Checchin, L. Trassoudaine, and R. Chapuis, "Mobile ground-based radar sensor for localization and mapping: An evaluation of two approaches," International Journal of Advanced Robotic Systems, vol. 10, no. 8, p. 307, 2013.

[17] J. Castorena and S. Agarwal, "Ground-edge-based LIDAR localization without a reflectivity calibration for autonomous driving," IEEE Robotics and Automation Letters, vol. 3, no. 1, pp. 344-351, 2018.

[18] R. W. Wolcott and R. M. Eustice, "Robust LIDAR localization using multiresolution gaussian mixture maps for autonomous driving," The International Journal of Robotics Research, vol. 36, no. 3, pp. 292-319, 2017.

[19] P. Groves, Principles of GNSS, Inertial, and Multisensor Integrated Navigation Systems, Second Edition, 2013.

[20] Physical layer measurements, ETSI 3GPP, 07 2018, release 15.

[21] E. Dahlman, S. Parkvall, and J. Skold, 5G-NR: The next generation wireless access technology. Academic Press, 2020.

[22] A. Chakraborty, E. Chai, K. Sundaresan, A. Khojastepour, and S. Rangarajan, "SkyRAN: A self-organizing LTE RAN in the sky," ser. CoNEXT '18. New York, NY, USA: Association for Computing Machinery, 2018, p. 280-292. [Online]. Available: https://doi.org/10.1145/3281411.3281437

**Claims**

1. A computer implemented method for estimating a target's position, the method comprising performing the following steps by one or more processors:

   receiving or collecting information relevant for the positioning of each one of a set of nodes providing coverage to a coverage area of a target, the set of nodes comprising a plurality of first-type nodes and a plurality of second-type nodes;

   receiving or collecting radio cellular network measurements from the plurality of first-type nodes;

   receiving or collecting GNSS satellite measurements from the plurality of second-type nodes;

   assembling the received or collected radio cellular network measurements into a matrix of distance measurements for a GNSS interval with a frequency rate $f_{GNSS}$;

   removing outliers included in the radio cellular network measurements by preprocessing the received or collected radio cellular network measurements;

   combining the radio cellular network measurements and the GNSS satellite measurements into a single vector of measurements;

   executing a weighting approach comprising applying one or more weights to the plurality of first-type nodes and to the plurality of second-type nodes, collecting all the applied weights, and multiplying the collected weights by the single vector of measurements, providing a new vector of weighted measurements as a result; and

   determining a position of the target based on the new vector of weighted measurements using a multilateration approach.

2. The method of claim 1, wherein the preprocessing of the received or collected radio cellular measurements comprises analyzing a variance of the radio cellular network measurements and considering a signal-to-noise ratio of the radio cellular network measurements as parameters to evaluate a value of the first-type nodes information.

3. The method of claim 1 or 2, wherein the preprocessing of the received or collected radio cellular measurements comprises:

   removing the radio cellular network measurements with a signal-to-noise ratio lower than a given threshold;

   removing said outliers, the latter including multipath propagation and/or noise; and

   calculating a geometrical distortion of the radio cellular network measurements by applying a linear model on the matrix of radio cellular network distance measurements.

4. The method of any one of the previous claims, wherein before the combining step, the method comprises oversampling and filtering the preprocessed radio cellular network measurements.

5. The method of claim 4, wherein the filtering comprises applying an Exponentially-Weighted Moving Average, EWNA, filter.

**6.** The method of any one of the previous claims, wherein the weights applied to the plurality of first-type nodes are different to the weights applied to the plurality of second-type nodes.

**7.** The method of any one of the previous claims, wherein the weights applied to the plurality of first-type and to the plurality of second-type nodes are determined through a machine learning approach.

**8.** The method of any one of the previous claims, wherein the weighting approach comprises assigning different values to the one or more weights based on different parameters including a power received at the target, an estimated distance at the target, a signal-to-noise ratio at the target, a Line of Sight, LoS, and a Non-LoS, NLoS, probability of the plurality of first-type nodes, an Horizontal Dilution of Precision, HDOP, an angle of arrival, AoA, of the plurality of first-type nodes or of the plurality of second-type nodes, or combinations thereof.

**9.** The method of any one of the previous claims, wherein the lateralization approach comprises applying a Non-Linear Least Squares, NLLS, algorithm or a Weighted-Non-Linear Least Squares, WNLLS, algorithm.

**10.** The method of claim 7, wherein the lateralization approach further comprises using a Gauss-Newton algorithm.

**11.** The method of any one of the previous claims, wherein the radio cellular network measurements at least comprises 5G New Radio, 5G-NR, measurements.

**12.** The method of any one of the previous claims, wherein the target comprises a vehicle or a user equipment.

**13.** A system for estimating a target's position, comprising:

a target (1);
a set of nodes (10, 20) providing coverage to a coverage area of the target, the set of nodes comprising a plurality of first-type nodes (10) and a plurality of second-type nodes (20); and a memory and one or more processors, the memory having instructions stored therein, the instructions, when executed by the one or more processors, cause the one or more processors to:

receive or collect information relevant for the positioning of each one of the set of nodes (10, 20);
receive or collect radio cellular network measurements from the plurality of first-type nodes (10);
receive or collect GNSS satellite measurements from the plurality of second-type nodes (20);
assemble the received or collected radio cellular network measurements into a matrix of distance measurements for a GNSS interval with a frequency rate fGNSS;
remove (101) outliers included in the radio cellular network measurements by preprocessing the received or collected radio cellular network measurements;
combine (104) the radio cellular network measurements and the GNSS satellite measurements into a single vector of measurements;
execute a weighting approach (105) comprising applying one or more weights to the plurality of first-type nodes (10) and to the plurality of second-type nodes (20), collecting all the applied weights, and multiplying the collected weights by the single vector of measurements, providing a new vector of weighted measurements as a result; and
determine a position of the target (1) based on the new vector of weighted measurements using a multilateration approach.

**14.** The system of claim 13, wherein the radio cellular network measurements at least comprises 5G New Radio, 5G-NR, measurements, and/or the wherein target (1) comprises a vehicle or a user equipment.

**15.** A non-transitory computer-readable medium storing computer-executable instructions that upon execution cause one or more processors to:

receive or collect information relevant for the positioning of each one of a set of nodes providing coverage to a coverage area of a target, the set of nodes comprising a plurality of first-type nodes and a plurality of second-type nodes;
receive or collect radio cellular network measurements from the plurality of first-type nodes;

receive or collect GNSS satellite measurements from the plurality of second-type nodes;

assemble the received or collected radio cellular network measurements into a matrix of distance measurements for a GNSS interval with a frequency rate fGNSS;

remove outliers included in the radio cellular network measurements by preprocessing the received or collected radio cellular network measurements;

combine the radio cellular network measurements and the GNSS satellite measurements into a single vector of measurements;

execute a weighting approach comprising applying one or more weights to the plurality of first-type nodes and to the plurality of second-type nodes, collecting all the applied weights, and multiplying the collected weights by the single vector of measurements, providing a new vector of weighted measurements as a result; and

determine a position of the target based on the new vector of weighted measurements using a multilateration approach.

**Fig. 1**

**Fig. 2**

# EUROPEAN SEARCH REPORT

**Application Number**

EP 23 38 3046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEL PERAL-ROSADO JOSE A ET AL: "Exploitation of 3D City Maps for Hybrid 5G RTT and GNSS Positioning Simulations", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 9205-9209, XP033792840, DOI: 10.1109/ICASSP40776.2020.9053157 [retrieved on 2020-04-01] * figure 2 (a) * * page 9205; ABSTRACT; 1. INTRODUCTION * * pages 9206 - 9208; 3. HYBRID 5G RTT AND GNSS POSITIONING; 4. SIMULATION RESULTS; 5. CONCLUSIONS * | 1-15 | INV. G01S19/14 G01S19/46 |
| A | DEL PERAL-ROSADO JOSE A ET AL: "Performance analysis of hybrid GNSS and lte localization in urban scenarios", 2016 8TH ESA WORKSHOP ON SATELLITE NAVIGATION TECHNOLOGIES AND EUROPEAN WORKSHOP ON GNSS SIGNALS AND SIGNAL PROCESSING (NAVITEC), IEEE, 14 December 2016 (2016-12-14), pages 1-8, XP033075031, DOI: 10.1109/NAVITEC.2016.7849332 [retrieved on 2017-02-09] * the whole document * | 2-5, 9-12,14 | |

TECHNICAL FIELDS SEARCHED (IPC)

G01S

-/--

The present search report has been drawn up for all claims

| Place of search | Date of completion of the search | Examiner |
|---|---|---|
| Munich | 29 February 2024 | Krummenacker, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

**EUROPEAN SEARCH REPORT**

Application Number

EP 23 38 3046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ESA: "Performance evaluation for hybrid positioning based on GNSS and NR", 3GPP DRAFT; R1-1900236 ESA – PERFORMANCE EVALUATION FOR HYBRID POSITIONING BASED ON GNSS AND NR, 3RD GENERATION PARTNERSHIP PROJECT (3GPP), MOBILE COMPETENCE CENTRE ; 650, ROUTE DES LUCIOLES ; F-06921 , vol. RAN WG1, no. Taipei, Taiwan; 20190121 – 20190125 11 January 2019 (2019-01-11), XP051575847, Retrieved from the Internet: URL:http://www.3gpp.org/ftp/tsg%5Fran/WG1% 5FRL1/TSGR1%5FAH/NR%5FAH%5F1901/Docs/R1%2D 1900236%2Ezip [retrieved on 2019-01-11] * pages 15-18; Annex A.3 GNSS Range Generation and Error Configuration; Annex A.4 PRS Signal Configuration; Annex B: Algorithm for Hybrid GNSS and OTDoA * | 6-8, 10-12,14 | |

-----

TECHNICAL FIELDS
SEARCHED      (IPC)

The present search report has been drawn up for all claims

| Place of search | Date of completion of the search | Examiner |
|---|---|---|
| Munich | 29 February 2024 | Krummenacker, Benoît |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. ALBANESE**; **V. SCIANCALEPORE**; **X. COSTA-P'EREZ**. Sardo: An automated search-and-rescue drone-based solution for victims localization. *IEEE Transactions on Mobile Computing*, 2022, vol. 21 (9), 3312-3325
- **J. A. DEL PERAL-ROSADO**; **R. E. I CASTILLO**; **J. MIGUEZ-SANCHEZ**; **M. NAVARRO-GALLARDO**; **J. A. GARCIA-MOLINA**; **J. A. LOPEZ-SALCEDO**; **G. SECO-GRANADOS**; **F. ZANIER**; **M. CRISCI**. Performance analysis of hybrid GNSS and LTE localization in urban scenarios. *2016 8th ESA Workshop on Satellite Navigation Technologies and European Workshop on GNSS Signals and Signal Processing (NAVITEC)*, 2016, 1-8
- **C. MENSING**; **S. SAND**; **A. DAMMANN**. Hybrid data fusion and tracking for positioning with GNSS and 3GPP-LTE. *International Journal of Navigation and Observation*, 2010, vol. 2010, 1-12
- **G. DE ANGELIS**; **G. BARUFFA**; **S. CACOPARDI**. GNSS/cellular hybrid positioning system for mobile users in urban scenarios. *IEEE Transactions on Intelligent Transportation Systems*, 2012, vol. 14 (1), 313-321
- **J. A. DEL PERAL-ROSADO**; **J. A. LOPEZ-SALCEDO**; **G. SECO-GRANADOS**; **F. ZANIER**; **M. CRISCI**. Preliminary analysis of the positioning capabilities of the positioning reference signal of 3GPP LTE. *Proceedings of European Workshop on GNSS signals and Signal Processing. Citeseer*, 2011
- **X. LIU**; **T. BALLAL**; **T. AL-NAFFOURI**. GNSS-based localization for autonomous vehicles: Prospects and challenges. *Proceedings of the EUSIPCO 27th European Signal Processing Conference, A Coruna, Spain*, 2019, 2-6
- **Y. GU**; **L.-T. HSU**; **S. KAMIJO**. GNSS/onboard inertial sensor integration with the aid of 3-D building map for lane-level vehicle self-localization in urban canyon. *IEEE Transactions on Vehicular Technology*, 2016, vol. 65 (6), 4274-4287
- **D. H. WON**; **E. LEE**; **M. HEO**; **S.-W. LEE**; **J. LEE**; **J. KIM**; **S. SUNG**; **Y. J. LEE**. Selective integration of GNSS, vision sensor, and INS using weighted DOP under GNSS-challenged environments. *IEEE Transactions on Instrumentation and Measurement*, 2014, vol. 63 (9), 2288-2298

- A sensor fusion approach for localization with cumulative error elimination. **F. ZHANG**; **H. STAHLE**; **G. CHEN**; **C. C. C. SIMON**; **C. BUCKL**; **A. KNOLL**. 2012 IEEE International Conference on Multisensor Fusion and Integration for Intelligent Systems (MFI). IEEE, 2012, 1-6
- **J. K. SUHR**; **J. JANG**; **D. MIN**; **H. G. JUNG**. Sensor fusion-based low cost vehicle localization system for complex urban environments. *IEEE Transactions on Intelligent Transportation Systems*, 2016, vol. 18 (5), 1078-1086
- **J. A. DEL PERAL-ROSADO**; **F. GUNNARSSON**; **S. DWIVEDI**; **S. M. RAZAVI**; **O. RENAUDIN**; **J. A. LOPEZ-SALCEDO**; **G. SECO-GRANADOS**. Exploitation of 3d city maps for hybrid 5G RTT and GNSS positioning simulations. *ICASSP 2020 - 2020 IEEE International Conference on Acoustics, Speech and Signal Processing (ICASSP)*, 2020, 9205-9209
- Vehicle localization in urban environments using feature maps and aerial images. **N. MATTERN**; **G. WANIELIK**. 2011 14th International IEEE Conference on Intelligent Transportation Systems (ITSC). IEEE, 2011, 1027-1032
- **I. PARRA**; **M. A. SOTELO**; **D. F. LLORCA**; **M. OCA~NA**. Robust visual odometry for vehicle localization in urban environments. *Robotica*, 2010, vol. 28 (3), 441-452
- Vision-based precision vehicle localization in urban environments. **C. LI**; **B. DAI**; **T. WU**. 2013 Chinese Automation Congress. IEEE, 2013, 599-604
- **E. WARD**; **J. FOLKESSON**. Vehicle localization with low cost radar sensors. *2016 IEEE Intelligent Vehicles Symposium (IV)*, 2016, 864-870
- **D. VIVET**; **F. G'EROSSIER**; **P. CHECCHIN**; **L. TRASSOUDAINE**; **R. CHAPUIS**. Mobile ground-based radar sensor for localization and mapping: An evaluation of two approaches. *International Journal of Advanced Robotic Systems*, 2013, vol. 10 (8), 307
- **J. CASTORENA**; **S. AGARWAL**. Ground-edge-based LIDAR localization without a reflectivity calibration for autonomous driving. *IEEE Robotics and Automation Letters*, 2018, vol. 3 (1), 344-351
- **R. W. WOLCOTT**; **R. M. EUSTICE**. Robust LIDAR localization using multiresolution gaussian mixture maps for autonomous driving. *The International Journal of Robotics Research*, 2017, vol. 36 (3), 292-319

- **P. GROVES**. Principles of GNSS, Inertial, and Multi-sensor Integrated Navigation Systems. 2013
- Physical layer measurements. *ETSI 3GPP*, July 2018
- **E. DAHLMAN** ; **S. PARKVALL** ; **J. SKOLD**. 5G-NR: The next generation wireless access technology. Academic Press, 2020
- SkyRAN: A self-organizing LTE RAN in the sky. **A. CHAKRABORTY** ; **E. CHAI** ; **K. SUNDARESAN** ; **A. KHOJASTEPOUR** ; **S. RANGARAJAN**. ser. CoN-EXT '18. New York, NY, USA. Association for Computing Machinery, 2018, 280-292